# FASCICULE DE BREVET EUROPEEN

(11) **EP 1 294 460 B1**
(45) Date de publication et mention de la délivrance du brevet: **04.01.2006**
(21) Numéro de dépôt: 01947552.4
(22) Date de dépôt: 20.06.2001
(51) Int. Cl.: B01D 21/00, B01D 17/00, B01D 21/02, B01D 21/24, B01D 17/025

(54) **DISPOSITIF DE PIEGEAGE DE PRODUITS A ELIMINER, A USAGE INDUSTRIEL OU MEDICAL**
VORRICHTUNG ZUM AUFFANGEN ZU BESEITIGENDER PRODUKTE, ZUR INDUSTRIELLEN UND MEDIZINISCHEN ANWENDUNG
DEVICE FOR TRAPPING PRODUCTS TO BE ELIMINATED, FOR INDUSTRIAL OR MEDICAL USE

(30) Priorité: 20.06.2000 FR 0007837
(43) Date de publication de la demande: 26.03.2003
(73) Titulaire: Ravineau, Michel, 41000 Cour Cheverny (FR)
(72) Inventeur: Ravineau, Michel, 41000 Cour Cheverny (FR)
(74) Mandataire: de la Bigne, Guillaume Michel Marie
(86) Numéro de dépôt international: PCT/FR2001/001938
(87) Numéro de publication internationale: WO 2001/097942

(56) Documents cités:
- WO-A-00/06280
- WO-A-94/04114
- DE-A- 4 131 905
- DE-A- 19 820 840
- FR-A- 2 775 184
- GB-A- 2 000 272
- GB-A- 2 301 086
- JP-A- 2 040 207
- US-A- 4 790 936
- US-A- 5 017 135
- US-A- 5 718 015

## Description

La présente invention concerne un dispositif de piégeage de produits à éliminer, à usage industriel ou médical.

Il est connu que certains produits doivent impérativement être éliminés dans des conditions de sûreté maximale, tant au moment de leur capture qu'au moment de leur stockage en vue d'un retraitement.

Les dispositifs de piégeage connus sont généralement de structure complexe et coûteuse. Ils comportent des parties jetables ou lavables, comme par exemple des filtres ou des sacs, mais également des parties fixes qui demeurent contaminatrices même si leur entretien est assuré de façon parfaite, étant donné que leur stérilisation ne peut, elle, être assurée. En outre, ces dispositifs ne peuvent garantir un piégeage à 100 % des déchets biologiques et toxiques, tels que le mercure, qui doivent cependant être éliminés dans des filières parfaitement contrôlées.

La nécessité de réaliser ce piégeage existe cependant, ce qui oblige par exemple les chirurgiens dentistes à s'équiper de séparateurs d'amalgame.

Un autre inconvénient des dispositifs connus est qu'ils requièrent souvent la présence d'appareillages pour leur fonctionnement ou pour leur entretien, ce qui peut occasionner des frais substantiels indésirables.

La présente invention vise à proposer un dispositif particulièrement simple et économique qui garantit une parfaite sécurité vis-à-vis des risques de contamination.

La présente invention a pour objet un dispositif de piégeage de produits à éliminer, constitué par un récipient fermé muni d'un conduit d'amenée de produits et d'un conduit d'aspiration, caractérisé en ce que ledit récipient comporte au moins une paroi gonflable qui est souple lorsqu'elle est dégonflée et rend le récipient peu encombrant et rigide lorsqu'elle est gonflée, le récipient étant alors assez rigide pour qu'une aspiration par le conduit d'aspiration crée une dépression qui aspire des produits à éliminer dans le récipient par le conduit d'amenée de produits.

Selon l'invention, le gonflage de ladite au moins une paroi confère au récipient une rigidité suffisante pour constituer au moins une partie de son armature.

De cette manière, le dispositif de piégeage de produits peut aspirer les produits à éliminer, par simple mise en dépression de son intérieur.

Dans un mode de réalisation particulier de l'invention, le dispositif comporte deux parois gonflables qui forment deux parois opposées du récipient fermé et sont complétées par des parois souples tendues entre elles après gonflage et/ou par des parois planes rigides.

Dans un autre mode de réalisation, le dispositif comporte une seule paroi gonflable et, à l'opposé de celle-ci, une articulation reliant deux parois rigides rejoignant ladite paroi gonflable, ainsi que des parois souples tendues entre les parois gonflables et rigides.

Dans un autre mode de réalisation, les parois gonflables sont toriques et définissent la périphérie du récipient.

Dans un mode de réalisation particulier de l'invention, le dispositif comporte un conduit d'aspiration destiné à être raccordé à une pompe à vide destinée à créer une dépression dans le récipient fermé.

Compte tenu de sa simplicité, le dispositif selon l'invention peut être réalisé en un matériau suffisamment économique pour que ledit dispositif soit jetable, l'usage unique du dispositif étant la parade la plus efficace aux risques d'infection ou de contamination.

Le dispositif selon l'invention trouve notamment son application en médecine, et plus particulièrement en milieu hospitalier, où il peut constituer un moyen de lutte contre les infections nosocomiales.

Lorsque sa ou ses parois gonflables sont dégonflées, le dispositif selon l'invention est peu encombrant. Il peut par exemple se présenter sous la forme d'un rectangle aplati, configuration qui facilite son stockage.

Le dispositif selon l'invention peut en particulier être combiné à l'unit jetable décrit dans la demande de brevet français publiée sous le numéro 2.775.184 au nom du même déposant.

Dans le cas particulier des cabinets dentaires, cette combinaison fournit un matériel complet qui résout à la fois les problèmes de branchement et les problèmes d'élimination des produits biologiques et toxiques, tels que les mercures dans les eaux usées.

D'une manière générale, le dispositif selon l'invention procure une sécurité vis-à-vis des problèmes de pollution et de contamination du fait que son fonctionnement ne repose pas sur un filtrage des produits mais sur leur piégeage.

Une fois le récipient rempli, son conduit d'amenée de produits peut être scellé par exemple par thermosoudage, afin que le piégeage des produits devienne définitif, et une identification, par exemple par code barre, peut être portée sur le dispositif pour faciliter sa collecte, sa traçabilité et le retraitement des produits piégés.

Dans un mode de réalisation particulier de l'invention, le conduit d'aspiration est muni d'un filtre dont la fonction est de maintenir à l'intérieur du récipient des produits vaporisés qui pourraient, en l'absence d'un tel filtre, s'échapper du fait de l'introduction d'air ou de nouveaux déchets dans le récipient. Ce filtre peut, en outre, être constitué par ou contenir un produit désinfectant visant à purifier l'air s'échappant du récipient.

Dans un autre mode de réalisation, compatible avec le précédent, le conduit d'aspiration est muni d'un clapet de sécurité qui empêche le récipient de déborder par ce conduit en cas de remplissage complet par un liquide.

Un tel clapet peut par exemple être constitué par une bille flottante maintenue en regard de l'embouchure, en forme de siège, du conduit et susceptible de l'obturer en venant s'appliquer contre ledit siège lorsque le niveau de liquide atteint une certaine hauteur dans le récipient.

Dans le but de mieux faire comprendre l'invention, on va en décrire maintenant trois modes de réalisation donnés à titre d'exemples non limitatifs de la portée de l'invention, en référence au dessin annexé dans lequel :
- la figure 1 est une vue en perspective d'un dispositif selon un mode de réalisation de l'invention,
- la figure 2 est une vue en perspective du même dispositif en configuration de stockage,
- la figure 3 est une vue en coupe selon III-III de la figure 1,
- la figure 4 est une vue analogue à la figure 3 d'un dispositif selon un autre mode de réalisation.
- la figure 5 est une vue en perspective d'un dispositif selon un autre mode de réalisation de l'invention,
- la figure 6 est une vue en coupe selon VI-VI de la figure 5.

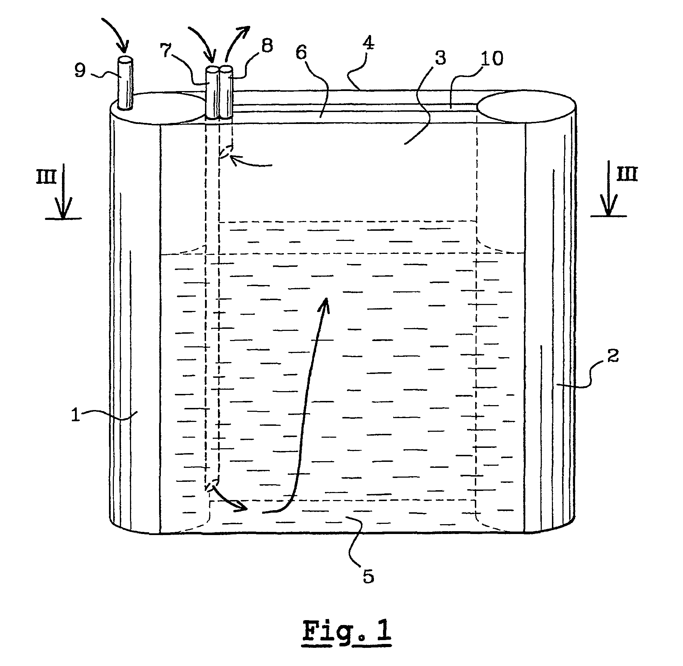

Le dispositif de la figure 1 comprend un récipient fermé formé par deux parois gonflables opposées 1, 2, réunies par deux parois planes rigides 3, 4, par un fond souple 5 et par une paroi supérieure souple 6.

Un conduit d'amenée de produits 7 traverse la paroi supérieure 6 et s'étend à l'intérieur du récipient jusqu'au voisinage de son fond 5.

Un conduit d'aspiration 8 traverse également la paroi 6 et débouche en partie supérieure du récipient.

Le conduit d'aspiration 8 est destiné à être raccordé à une pompe à vide (non représentée) qui crée un vide dans le récipient et force l'aspiration des produits à travers le conduit d'amenée 7.

Un conduit de gonflage 9 permet le remplissage des parois gonflables 1 et 2.

Dans le mode de réalisation illustré ici, la paroi 2 se gonfle en même temps que la paroi 1 grâce à un canal 10 formé dans la paroi supérieure 6 et reliant les deux parois.

Dans une variante non illustrée, la paroi 2 comporte son propre conduit de gonflage.

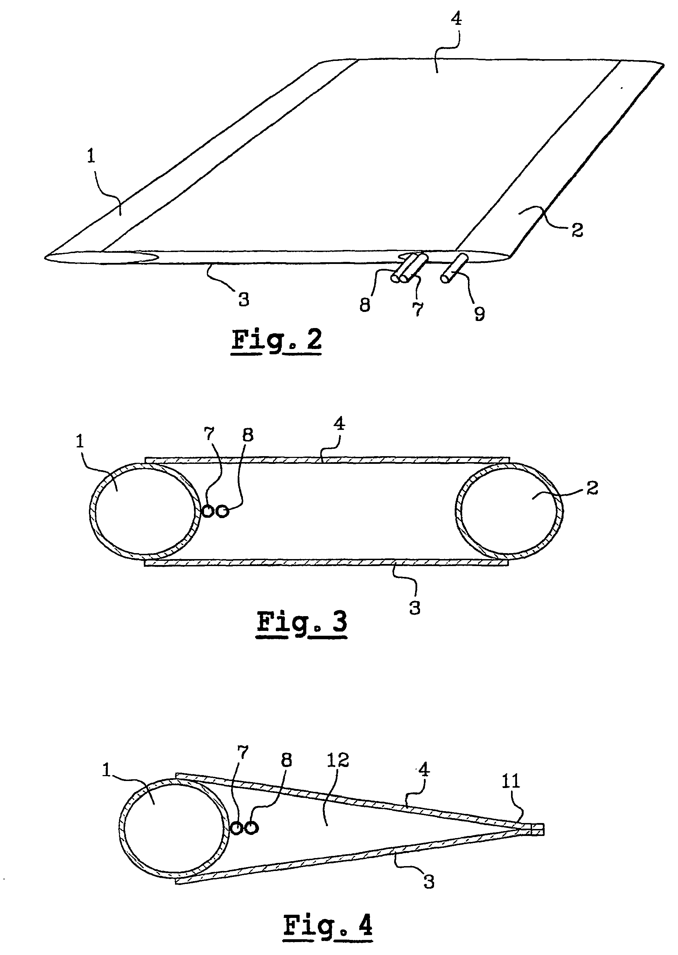

Comme on le voit mieux à la figure 3, les parois 1 et 2 gonflées prennent une forme cylindrique. Leur diamètre détermine l'épaisseur du récipient.

Les parois planes rigides 3 et 4 sont maintenues écartées l'une de l'autre par les parois gonflées 1 et 2, tandis que les parois souples 5 et 6 sont tendues entre les parois rigides et les parois gonflées.

Lorsque les parois 1 et 2 ne sont pas gonflées, le récipient se présente sous la forme d'une plaque rectangulaire aplatie, les deux parois rigides 3 et 4 étant collées l'une contre l'autre, ainsi que représente à la figure 2.

Dans cette configuration, plusieurs dispositifs peuvent être facilement stockés en piles, ce qui est avantageux pour un dispositif à usage unique consommé en grandes quantités.

Comme on le voit à la figure 1, lors de son utilisation, le dispositif piège les produits aspirés par le conduit 7 sous l'effet de la dépression créée par la pompe à vide reliée au conduit 8. La rigidité conférée par les parois gonflables est en effet suffisante pour que le dispositif résiste à cette dépression et qu'une aspiration se produise par le conduit 7.

Lorsque le récipient est complètement rempli, les conduits 7 et 8 sont obturés, par exemple par soudage, collage, ligature ou pliage.

Le dispositif peut ensuite être envoyé en toute sécurité dans une usine de retraitement des déchets.

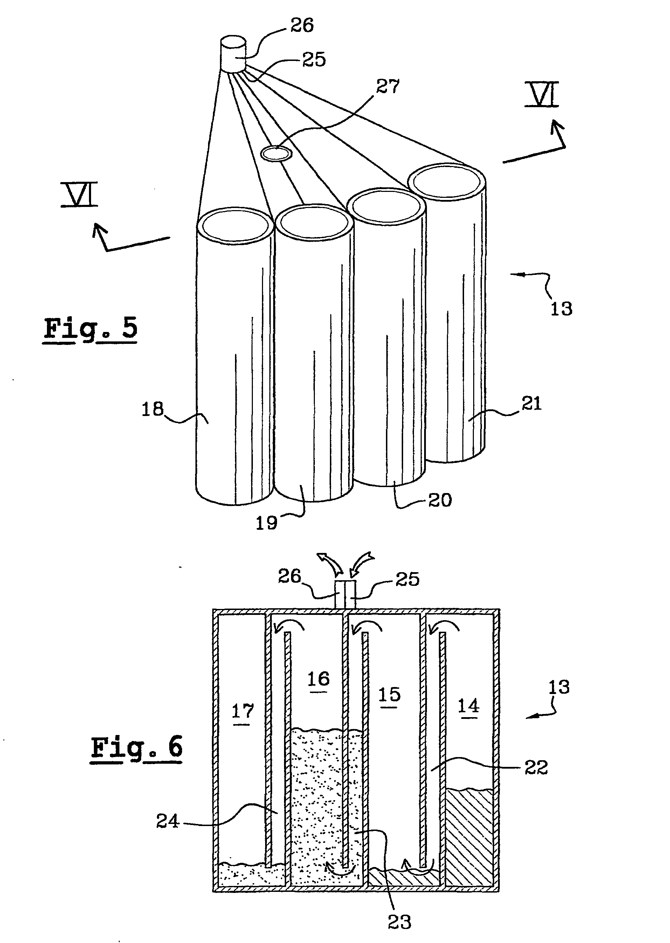

Dans le mode de réalisation de la figure 4, le récipient ne diffère du précédent que par le remplacement de la paroi gonflable 2 par une charnière 11 reliant les deux parois rigides 3 et 4 et par le remplacement des deux parois souples rectangulaires 5 et 6 par des parois souples triangulaires 12

Ce mode de réalisation peut s'avérer plus simple et économique à réaliser que le précédent.

Dans les modes de réalisation qui viennent d'être décrits, le récipient est vide en début d'utilisation.

Une autre possibilité d'utilisation du dispositif selon l'invention est de le remplir, préalablement à son utilisation, d'un liquide de barbotage dont le niveau arrive au dessus de l'extrémité inférieure du conduit d'amenée de produits 7. Le dispositif peut alors être utilisé pour désinfecter et/ou traiter l'air aspiré par la pompe avant qu'il ne pénètre dans les parties fixes de l'installation.

La figure 5 illustre un autre mode de réalisation dans lequel le récipient 13 comprend quatre compartiments 14, 15, 16, 17 dont chacun présente une section sensiblement triangulaire à la manière du récipient de la figure 4.

Chaque compartiment est muni d'une paroi gonflable cylindrique 18-21 qui lui confère sa rigidité et son volume.

Comme on le voit à la figure 6, les quatre compartiments 14-17 communiquent deux à deux par des conduits 22-24 qui relient la partie supérieure d'un récipient avec la partie inférieure du récipient voisin.

En outre, un conduit d'amenée de produits 25 situé à la charnière des quatre compartiments débouche en partie inférieure du compartiment 14, tandis qu'un conduit d'aspiration 26 débouche en partie supérieure du compartiment 17.

On comprend que l'air circulant dans le dispositif traverse successivement tes compartiments 14, 15, 16 et 17.

Ainsi, les quatre compartiments peuvent être utilisés pour remplir les fonctions suivantes :
- compartiment 14 : récupération des matières solides et liquides aspirées,
- compartiment 15 : récupération des fuites éventuelles provenant du compartiment 14,
- compartiment 16 : barbotage dans un liquide de stérilisation/traitement de l'air provenant des compartiments 14 et 15,
- compartiment 17: récupération des fuites éventuelles provenant du compartiment 16.

Le dispositif 13 garantit que les produits récupérés sont retenus dans ses compartiments et que l'air aspiré à travers lui est exempt de souillures, ce qui évite la pollution des conduites fixes et de la pompe à vide.

Le liquide de barbotage peut être introduit dans le récipient au moment de l'utilisation du récipient, par l'ouverture 27 prévue à cet effet. Une autre possibilité est que le compartiment 16 soit pré-rempli, auquel cas il faut prévoir des obturateurs sécables des conduits 23 et 24 afin que le liquide demeure dans le compartiment 16 lors du stockage du dispositif.

Dans une variante (non représentée) du même dispositif, les quatre compartiments sont constitués par deux récipients comprenant chacun deux compartiments et reliés entre eux de manière à réaliser l'enchaînement de compartiments qui vient d'être décrit

L'un des compartiments, celui situé en amont, retient les produits aspirés et doit être remplacé après chaque utilisation ou en tout cas assez fréquemment.

L'autre compartiment, situé en aval, contient le liquide de barbotage et peut être conservé plus longtemps.

Les modes de réalisation ci-dessus ne sont fournis qu'à titre d'exemples pour bien faire comprendre l'invention, laquelle n'est nullement limitée aux caractéristiques décrites en référence à cet exemple.

En particulier, toutes les parois du récipient peuvent être gonflables.

De plus, aucune limitation dimensionnelle ne s'impose quant aux parois du récipient, lequel pourrait être de très grande taille pour être placé à proximité d'une usine afin d'y collecter tous les produits devant impérativement être récupérés.

## Revendications

1. Dispositif de piégeage de produits à éliminer, constitué par un récipient fermé muni d'un conduit (7, 25) d'amenée de produits et d'un conduit d'aspiration (8,26), **caractérisé en ce que** ledit récipient comporte au moins une paroi gonflable (1, 2, 18-21) qui est souple lorsqu'elle est dégonflée et rend le récipient peu encombrant et rigide lorsqu'elle est gonflée, le récipient étant alors assez rigide pour qu'une aspiration par le conduit d'aspiration crée une dépression qui aspire des produits à éliminer dans le récipient par le conduit d'amenée de produits.

2. Dispositif selon la revendication 1, **caractérisé en ce qu'**il comporte deux parois gonflables (1, 2) qui forment deux parois opposées du récipient fermé et sont complétées par des parois souples (5, 6) tendues entre elles après gonflage et/ou par des parois planes rigides (3, 4).

3. Dispositif selon la revendication 1, **caractérisé en ce qu'**il comporte une seule paroi gonflable (1) et, à l'opposé de celle-ci, une articulation (11) reliant deux parois rigides (3, 4) rejoignant ladite paroi gonflable (1), ainsi que des parois souples (12, 13) tendues entre les parois gonflables et rigides.

4. Dispositif selon l'une quelconque des revendications 1 à 3, **caractérisé en ce qu'**il comporte un conduit d'aspiration (8, 26) destiné à être raccordé à une pompe à vide qui crée une dépression dans le récipient.

5. Dispositif selon l'une quelconque des revendications 1 à 4, **caractérisé en ce que** le conduit d'aspiration est muni d'un filtre.

6. Dispositif selon l'une quelconque des revendications 1 à 5, **caractérisé en ce que** le conduit d'aspiration est muni d'un clapet de sécurité qui empêche le récipient de déborder par ce conduit en cas de remplissage complet par un liquide.

7. Dispositif selon l'une quelconque des revendications 1 à 6, **caractérisé en ce qu'**il comporte plusieurs compartiments (14-17) reliés deux à deux par des conduits (22,23,24).

## Patentansprüche

1. Vorrichtung zum Fangen von zu eliminierenden Produkten, bestehend aus einem geschlossenen Behälter, der mit einer Leitung (7, 25) zum Zuführen von Produkten und einer Ansaugleitung (8, 26) versehen ist, **dadurch gekennzeichnet, dass** der Behälter mindestens eine aufblasbare Wand (1, 2, 18-21) umfasst, die geschmeidig ist, wenn sie nicht aufgeblasen ist, und die den Behälter Platz sparend und starr macht, wenn sie aufgeblasen ist, wobei der Behälter dann ausreichend starr ist, damit ein Ansaugen durch die Ansaugleitung einen Unterdruck schafft, der zu eliminierende Produkte durch die Produktzuführleitung in den Behälter ansaugt.

2. Vorrichtung nach Anspruch 1, **dadurch gekennzeichnet, dass** sie zwei aufblasbare Wände (1, 2) umfasst, die zwei entgegen gesetzte Wände des geschlossenen Behälters ausbilden und durch geschmeidige Wände (5, 6), die zwischen ihnen nach dem Aufblasen gespannt sind, und/oder durch ebene starre Wände (3, 4) ergänzt ist.

3. Vorrichtung nach Anspruch 1, **dadurch gekennzeichnet, dass** sie eine einzige aufblasbare Wand (1) umfasst und dieser entgegen gesetzt eine Anlenkung (11), die zwei starre Wände (3, 4) verbindet, die die aufblasbare Wand (1) erreichen, sowie geschmeidige Wände (12, 13), die zwischen den aufblasbaren und starren Wänden gespannt sind.

4. Vorrichtung nach einem der Ansprüche 1 bis 3, **dadurch gekennzeichnet, dass** sie eine Ansaugleitung (8, 26) umfasst, die dazu bestimmt ist, an eine Vakuumpumpe angeschlossen zu werden, die in dem Behälter einen Unterdruck schafft.

5. Vorrichtung nach einem der Ansprüche 1 bis 4, **dadurch gekennzeichnet, dass** die Ansaugleitung mit einem Filter versehen ist.

6. Vorrichtung nach einem der Ansprüche 1 bis 5, **dadurch gekennzeichnet, dass** die Ansaugleitung mit einer Sicherheitsklappe versehen ist, die den Behälter daran hindert, über diese Leitung im Fall des kompletten Füllens durch eine Flüssigkeit überzufließen.

7. Vorrichtung nach einem der Ansprüche 1 bis 6, **dadurch gekennzeichnet, dass** sie mehrere Fächer (14-17) umfasst, die zu je zwei durch Leitungen (22, 23, 24) verbunden sind.

## Claims

1. Device for trapping products to be eliminated, consisting of a closed container provided with a product-supplying duct (7, 25) and a suction duct (8, 26) **characterized in that** said container comprises at least one inflatable wall (1, 2, 18-21) which is flexible when deflated and makes the container space-saving and rigid when inflated, the container being rigid enough so that a suction by the suction duct creates a depression which sucks products to be eliminated in the container by the product- supplying duct.

2. Device according to claim 1, **characterized in that** said device includes two inflatable walls (1, 2) forming two opposite walls of the closed container and being completed by flexible walls (5, 6) stretched between them after inflation and/or by plane rigid walls (3, 4).

3. Device according to claim 1, **characterized in that** said device includes only one inflatable wall (1) and, opposite to it, an articulation (11) joining two rigid walls (3, 4) rejoining said inflatable wall (1), as well as flexible walls (12, 13) stretched between the inflatable and flexible walls.

4. Device according to any one of claims 1 to 3, **characterized in that** said device includes a suction duct (8, 26) for being connected to a vacuum pump, which creates a depression into the container.

5. Device according to any one of claims 1 to 4, **characterized in that** the suction duct has a filter.

6. Device according to any one of claims 1 to 5, **characterized in that** the suction duct has a safety valve which prevents the container from flowing over through said duct in case of full filling by a liquid.

7. Device according to any one of claims 1 to 6, **characterized in that** said device includes several compartments (14-17) joined one to one by ducts (22, 23, 24).
